# EUROPEAN PATENT APPLICATION

(11) **EP 4 227 370 A1**
(43) Date of publication of application: **16.08.2023**
(21) Application number: 22155777.0
(22) Date of filing: 09.02.2022
(51) Int. Cl.: C09C 1/36

(54) **COLOR-NEUTRAL RUTILE PIGMENT PARTICLE**

(71) Applicant: KRONOS INTERNATIONAL, INC., 51373 Leverkusen (DE)
(72) Inventor: Mersch, Frank, 42799 Leichlingen (DE); Bendzko, Norbert, 51375 Leverkusen (DE)

(57) **Abstract**

The invention relates to a color-neutral rutile pigment particle, a method for obtaining said pigment particle, and a composition comprised of said rutile pigment particle. Finally, the invention refers to the use of the rutile pigment particle in various applications.

## Description

### Field of the invention

The invention relates to a color-neutral rutile pigment particle, a method for obtaining said pigment particle, and a composition comprised of said rutile pigment particle. Finally, the invention refers to the use of the rutile pigment particle in various applications.

### Technological background of the invention

Titanium dioxide, also known as titania, is a white pigment for high-end applications and occurs as two important polymorphs, the stable rutile and metastable anatase. As a pigment, the titanium dioxide pigment imparts a white color, and provides the opacity necessary to hide the substrate it is applied on. The sulphate process and the chloride process are established routes to manufacture titanium dioxide. Depending on the end use, the chloride route is preferred over the sulphate route. As opposed to the sulphate process, the chloride process is more energy- and waste-efficient since chlorine is recycled and the obtained waste is moreover less environmental invasive. The sulphate route, however, requires less pure starting material such as the ore ilmenite. In this regard, the higher level of availability of the ilmenite renders the sulphate route more attractive. In general, rutile can be manufactured via both processes, the chloride and the sulphate process.

Depending on the end use, rutile is chosen over anatase due to its higher refractive indices and Mohs hardness. As compared to anatase, rutile has a yellowish appearance which is caused by differing adsorption edges of both polymorphs. In addition further elements such as iron, manganese and chromium which originate from the ilmenite used as starting material may amplify the yellowness. These elements cannot be easily removed and remain as traces in the titanium dioxide.

In some end-uses, a more yellowish appearance is desired. However, in various applications a more color-neutral appearance is preferred. Thus, when employed into a matrix such as a paint or a lacquer, the matrix will inevitably have a yellowish appearance which is undesired. This holds to true for both, white or colorful applications. The latter uses first a color-neutral or white paint as a base layer on which a colorful paint is applied.

In sum, there is the need in the art to obtain a rutile pigment particle which is color-neutral, i.e. has no yellowish appearance.

### Object and summary of the invention

It is the technical object of the invention to provide a color-neutral rutile pigment particle.

This object is achieved by a color-neutral rutile pigment particle which is comprised of a rutile particle and at least one coating applied on said rutile particle, wherein the coating is doped with a blue pigment. The object is moreover achieved by the method to obtain the same, a composition which comprises said particle as well as the use of the herein described rutile pigment particle.

The inventors have surprisingly found a color-neutral rutile pigment particle comprised of a rutile particle and at least one coating applied on said rutile particle suppresses the yellowish color tone rutiles naturally have. Conclusively, when a colorful composition is applied the color of said composition must not be adapted to compensate the yellowish tone. In case, when the color-neutral pigment particle according to the invention is used in white applications, the appearance is neutral and not yellowish.

Therefore, in a first aspect, the invention refers to a color-neutral rutile pigment particle comprised of a rutile particle and at least one coating applied on said rutile particle, characterized in that the coating is doped with a blue pigment.

In another aspect, the invention is directed to a method for obtaining a color-neutral rutile pigment particle comprised of the following steps:
a) providing an aqueous suspension of a rutile pigment particle,
b) adding a coating precursor to said aqueous suspension,
c) adding a blue pigment or its precursor to said aqueous suspension, and
d) forming a coating from the coating precursor doped with the blue pigment onto the rutile pigment particle to obtain the color-neutral rutile pigment particle

In a yet other aspect, the present invention pertains to a composition comprising the color-neutral rutile pigment particle as disclosed herein.

In a final aspect, the present invention refers to the use of the color-neutral rutile pigment particle according to any one of claims 1 to 7 to color a coating, lacquer, paint, plastic, paper, coated paper, or fiber.

### Description of the invention

These and other aspects, features and advantages of the invention become obvious to the skilled person from the study of the following detailed description and claims. Each feature from one aspect of the invention can be employed in any other aspect of the invention. Numerical ranges stated in the format "from x to y" include the mentioned values and the values that are within the respective measuring accuracy as known to the skilled person. If several preferred numerical ranges are stated in this format, it is a matter of course that all ranges formed by the combination of the various end points are also included.

The color-neutral rutile pigment particle according to the present invention is comprised of a rutile pigment particle and at least one coating applied on said rutile particle, wherein the coating is doped with a blue pigment. The "rutile pigment particle", as used herein, refers to titanium dioxide in the rutile polymorph obtained by the sulphate or chloride process which is optionally milled. Preferably, said pigment particle consists of at least 98 wt.%, preferably of at least 99 wt.% rutile referred to the total weight of said pigment particle.

The color-neutral rutile pigment particle further comprises at least one coating. Precursors and techniques to form such at least one coating are known in the art. The at least one coating is doped with a blue pigment. Any blue pigment known in the art can be used which confers blue color.

Within the scope of the invention, the rutile pigment particle has a primary size such that it scatters the visible light is scatter, ideally to a high rate. The particle size is the mass-related median d50 (hereinafter: d50) of from 200 nm to 400 nm determined by disc centrifuge.

Preferably, on the at least one coating which is applied on the color-neutral rutile pigment particle, a further coating is applied.

The at least one coating and the further coating are independently selected from the group consisting of silicon dioxide, aluminum oxide, tin oxide, zirconium oxide, cerium oxide, phosphorous oxide or a mixture thereof. It is noted that said oxides also include the respective hydroxides, oxyhydroxides and water-containing phases. Among these, silicon dioxide and aluminum oxide are particularly preferred.

Further, the color-neutral pigment particle preferably comprises a final coating. "Final coating", as defined herein, is the outmost coating of the color-neutral rutile pigment particle. Such compounds can be selected from siloxanes, in particular polydimethylsiloxanes (PDMS), silanes, and alcohols such as the commercially available Tegomer DA 640, trimethylolpropane (TMP), octyltrichlorosilane (OCTCS), octyltriethoxysilane (OCTEO) or etidronic acid. Techniques to form an aftertreatment are known in the art.

In a specific embodiment of the invention, the at least one coating is silicon dioxide, and the further coating is aluminum oxide. This coating sequence is particularly preferred as the silicon dioxide coating suppresses the natural photocatalytic activity of the rutile, and the aluminum oxide contributes to the good dispersibility of the color-neutral rutile pigment particle. In addition, the aluminum oxide covers the blue pigment which can thus not interact with other components they might be exposed to, for example, in a paint or the like.

In another embodiment, the further coating is also doped with a blue pigment.

In a preferred embodiment the blue pigment is selected from the group consisting of neodymium oxide, neodymium hydroxide, neodymium phosphate, Prussian blue, Egyptian Blue, azurite, copper hydroxide, cobalt oxide, and a mixture thereof. "Prussian Blue", as used herein, refers to the compound iron(II,III)hexacyanoferrate(II,III), and "Egyptian Blue" refers to calcium copper silicate (CaCuSi₄O₁₀). "Azurite", as used herein, refers to the mineral with the formula Cu₂CO₃(OH)₂. Even more preferably, the blue pigment is selected from neodymium oxide, neodymium hydroxide, neodymium phosphate, or a mixture thereof.

In particular, the at least one coating and the further coating are independently doped with 100 ppm to 100,000 ppm, preferably 500 ppm to 12,000 ppm of the blue pigment.

The pigment particle according to the invention possess a *b**value of between +2.5 and -2.0, more preferably of between +1.5 and -1.0, even more preferably of between +0.75 and -0.5 in the CIELAB color space normed by EN ISO 11664-4.

In a further aspect, the invention pertains to a method for obtaining a color-neutral pigment particle comprising the following steps:
a) providing an aqueous suspension of a rutile pigment particle,
b) adding a coating precursor to said aqueous suspension,
c) adding a blue pigment or its precursor to said aqueous suspension, and
d) forming a coating from the coating precursor doped with the blue pigment onto the rutile particles to obtain the color-neutral pigment particle.

The coating formed in step d) is either an at least one coating applied directly onto the rutile pigment particle or a further coating applied on the at least one coating.

The blue pigment can be selected from the groups disclosed herein. Preferably, the blue pigment is added in such an amount that the coating of the color-neutral pigment particle is doped with 100 ppm to 100,000 ppm, more preferably 500 ppm to 12,000 ppm of the blue pigment.

In a preferred embodiment, after step d), a further coating onto the at least one coating in the step e) is formed. The further coating can be selected from the group consisting of silicon dioxide, aluminum oxide, tin oxide, zirconium oxide, cerium oxide, phosphorous oxide or a mixture thereof. It is noted that said oxides also include respective hydroxides, oxyhydroxides and respective water-containing phases. Among these, silicon dioxide and aluminum are particularly preferred.

The method steps described herein are conducted in the following order: a), b), c), and then d). However, the method can also be conducted in the following order: a), c), b), and then d). The steps b) and c) can also be conducted simultaneously.

Preferably, the at least one coating is silicon dioxide and the further coating is aluminum oxide.

Neodymium oxide, neodymium phosphate, Egyptian Blue and cobalt oxide can be employed as solid compounds and added as a blue pigment in step c). Optionally, they can be milled prior to their use as a blue pigment. The blue pigment preferably has a particle size of less than 1,000 nm, more preferably less than 200 nm, and even more preferably less 100 nm. The particle size is the mass-related median d50 (hereinafter: d50) determined by disc centrifuge.

Neodymium hydroxide can be precipitated in alkaline pH ranges above 8, preferably between 9 to 12.

Prussian Blue is manufactured conventionally by reacting iron ions with potassium ferrocyanide in an aqueous solution having a neutral or acidic pH value, preferably in a pH range of 0 to 8, preferably 1 to 4. It can be added to the suspension in step b) or obtained *in situ* by reacting the afore-mentioned precursors. Preferably, the Prussian Blue is manufactured *in situ.* This in particular suitable when the formation of the at least one coating and/or the further coating in step d) and/or e) is also accomplished by lowering the pH value to an acidic pH value such as 1 to 4. Silicon dioxide is also precipitated, for example, by providing an aqueous solution of water glass with a preferably slightly to highly alkaline pH value and then lowering the pH to an acidic pH value such as 1 to 4. As a result, simultaneously the Prussian Blue will be obtained, the silicon dioxide is precipitated and forms a coating doped with the Prussian Blue onto the rutile pigment particle. This approach can be used with all blue pigments which can be formed *in situ* at acidic pH value.

Azurite can be manufactured by precipitating it from an aqueous solution comprising CuSO₄ and Na₂CO₃, or CuSO₄ and NaHCO₃ at a pH value of 6.0 to 7.0, preferably of 6.5.

Copper hydroxide can be obtained by reacting copper with water in the presence of oxygen or air. Alternatively, copper hydroxide can be manufactured by reacting sodium hydroxide to a solution of copper sulfate, preferably in the presence of ammonium chloride to obtain a purer product.

In a further aspect, the invention refers to a composition comprising the color neutral rutile pigment particle according to any one the claim 1 to 7. The composition can be selected from the group consisting of a coating, lacquer, paint, plastic, paper, in particular a coated paper, and fiber.

Any plastic known in the prior art and suitable for the purpose according to the invention can be employed as the plastic. "Plastic", as used herein, relates to a material containing at least 50.0 wt.% of a polymer, based on the total weight of the plastic. Said polymer may be a homopolymer, a copolymer or a grafted polymer. Further, the polymer may be an atactic, isotactic or syndiotactic polymer. Further, the plastic is a thermoplastic, elastomer, thermoset or thermoplastic elastomer, preferably a thermoplastic. Without limitation, the polymer is selected from the group consisting of polyolefins, polystyrene, polyamide, polyketone, polyester, polyurethane, poly(meth)acrylate, and mixtures thereof. Without limitation, the polyolefin is selected from the group consisting of polyethylene, polypropylene, polybutylene, and mixtures thereof. The colored pigment particle can be incorporated in the plastic by known techniques and methods, for example, by extruding. The colored pigment particle is processed into the plastic in the usual amounts. Thus, the plastic obtained contains from 0.1 to 30.0 wt.%, preferably from 1.0 to 25.0 wt.%, of the agent according to the invention, based on the total weight of the plastic.

Use of the color-neutral rutile pigment particle to color a coating, lacquer, paint, plastic, paper, coated paper, or fiber.

### Examples

### Preparation of the color-neutral rutile pigment particle

### Example 1a: Manufacture a color-neutral rutile pigment particle with Nd₂O₃

Rutile pigment particles (200 g) were mixed with water (1 I) to obtain an aqueous suspension. Then, the suspension was heated to 60 °C and the pH value was adjusted to 9.7. Then, under agitation, zirconium sulfate was added over a course of 15 minutes in an amount to result in a 0.4 wt.% zirconium dioxide coating referred to the total weight of the color-neutral rutile pigment particles. The thus obtained suspension was aged for about 30 minutes. Then, the pH value was lowered to about 1.

Over a course of 10 minutes an aqueous suspension of neodymium oxide (20 ml, 5 wt.% referred to the weight of the water) was added to rutile pigment particle suspension.

Then, sodium aluminate was added over a course of 40 minutes in an amount to result in a 2.4 wt.% aluminum oxide coating referred to the total weight of the color-neutral rutile pigment particles. Then, the pH was adjusted to a value of about 7 to finalize the coating formation. The color-neutral pigment particles were filtered, washed and dried.

### Example 1b: Manufacture a color-neutral rutile pigment particle with Nd₂O₃

A color-neutral rutile pigment particle was obtained following the protocol of Example 1a, but 40 ml of the aqueous solution of neodymium oxide was used.

### Example 1c: Manufacture a color-neutral rutile pigment particle with Nd₂O₃

A color-neutral rutile pigment particle was obtained following the protocol of Example 1a, but 80 ml of the aqueous solution of neodymium oxide was used.

### Example 1d: Manufacture a color-neutral rutile pigment particle with Nd₂O₃

A color-neutral rutile pigment particle was obtained following the protocol of Example 1d, but 160 ml of the aqueous solution of neodymium oxide was used.

### Test methods and test results

### CIELAB Determination

The tone (b*) of Examples 1a-1d was determined as follows: the color-neutral rutile pigment particle was pressed in a form of powder pellet with a matte surface. The X-Rite VS450 colorimeter was used for reflectance data determination.

The results were compared to a standard rutile pigment particle. The b* shift compared to the standard rutile pigment particle is compiled in table below.

| *Example* | Δ*b** |
|---|---|
| Example 1a | 0.327 |
| Example 1b | 0.580 |
| Example 1c | 0.770 |
| Example 1d | 0.910 |

It can be seen that the amount of the dopant correlates with the shift in the b* value. Thus, the desired b* value can be adjusted to obtain the color-neutral rutile pigment particle.

### Particle size determination

The size of the titanium dioxide particles were determined by using a CPS Disc centrifuge, Model DC 20000 available from CPS Instrument, Inc. located in Florida, United States of America. The sample was prepared by obtaining a first premix by mixing 2 g of a dry pigment particles with 80 g sodium hexametaphosphate solution (0.06 mass % in water) to obtain a first premix. The sodium hexametaphosphate is commercially available from BK Giulini GmbH in Ladenburg, Germany, under the name Calgon N until the first premix was homogenized. Subsequently, 2 g of this first premix were added to a sodium hexametaphosphate solution (0.06 mass % in water), and again sufficiently homogenized by mixing to obtain a second premix. 100 µl of this second premix were used as the sample for determining the particle size. The centrifuge was operated at 3,000 rpm. The calibration standard parameters were as follows:
Particle density: 1.385 g/mL
Peak diameter: 1.27 µL
Half height peak width: 0.08 µL

The fluid parameters were as follows:
Fluid density: 1.045 g/mL
Fluid refraction index: 1.344
Fluid viscosity: 1.2 cps

## Claims

1. A color-neutral rutile pigment particle comprised of a rutile pigment particle and at least one coating applied on said rutile particle, **characterized in that** the coating is doped with a blue pigment.

2. The color-neutral rutile pigment particle according to claim 1, **characterized in that** on the at least one coating which is applied on the rutile pigment particle, a further coating is applied.

3. The color-neutral rutile pigment particle according to claim 1 or 2, **characterized in that** the at least one coating and the further coating are independently selected from the group consisting of silicon dioxide, aluminum oxide, tin oxide, zirconium oxide, cerium oxide, phosphorous oxide or a mixture thereof; and/or
the at least one coating is silicon dioxide, and the further coating is aluminum oxide.

4. The color-neutral rutile pigment particle according to claim 2 or 3, **characterized in, that** the further coating is doped with a blue pigment.

5. The color-neutral rutile pigment particle according to any one of claims 1 to 4, **characterized in, that**
the blue pigment is selected from the group consisting of neodymium oxide, neodymium hydroxide, neodymium phosphate, Prussian blue, Egyptian Blue, azurite, copper hydroxide, cobalt oxide, and a mixture thereof.

6. The color-neutral rutile pigment particle according to claim 5, **characterized in, that** the blue pigment is neodymium oxide, neodymium hydroxide, neodymium phosphate or a mixture thereof.

7. The color-neutral rutile pigment particle according to any one of claims 1 to 6, **characterized in, that**
the at least one coating and the further coating are independently doped with 100 ppm to 100,000 ppm, preferably 500 ppm to 12,000 ppm of the blue pigment.

8. A method for obtaining a color-neutral rutile pigment particle comprised of the following steps:
a) providing an aqueous suspension of a rutile pigment particle,
b) adding a coating precursor to said aqueous suspension,
c) adding a blue pigment or its precursor to said aqueous suspension, and
d) forming a coating from the coating precursor doped with the blue pigment onto the rutile pigment particle to obtain the color-neutral rutile pigment particle.

9. The method for obtaining a color-neutral rutile pigment particle, **characterized in that** the coating formed in step d) is either an at least one coating applied directly onto the rutile pigment particle or a further coating applied on the at least one coating.

10. The method according to claim 8 or 9, **characterized in that**
the blue pigment is selected from the group consisting of consisting of neodymium oxide, neodymium hydroxide, Prussian blue, Egyptian Blue, azurite, copper hydroxide, cobalt oxide, and a mixture thereof.

11. The method according to any one of claims 8 to 10, **characterized in that** the blue pigment is added in such an amount that the coating of the color-neutral rutile pigment particle is doped with 100 ppm to 100,000 ppm, preferably 500 ppm to 12,000 ppm of the blue pigment.

12. A composition comprising the color-neutral rutile pigment particle according to any one of claims 1 to 7.

13. The composition according to claim 12, **characterized in that**
the composition is selected from the group consisting of coating, lacquer, paint, plastic, paper, coated paper, or fiber.

14. Use of the color-neutral rutile pigment particle according to any one of claims 1 to 7 to color a coating, lacquer, paint, plastic, paper, coated paper, or fiber.
